# EUROPÄISCHE PATENTANMELDUNG

(11) **EP 3 549 797 A1**
(43) Veröffentlichungstag der Anmeldung: **09.10.2019**
(21) Anmeldenummer: 19163534.1
(22) Anmeldetag: 18.03.2019
(51) Int. Cl.: B60D 1/44

(54) **ZUGFAHRZEUG MIT ANHÄNGEBOCK MIT ASYMMETRISCHER, WENDBARER LOSLAGERSTRUKTUR ZUR LAGERUNG EINER KUPPLUNGSBAUGRUPPE**

(30) Priorität: 20.03.2018 DE 102018204285
(71) Anmelder: JOST-Werke Deutschland GmbH, 63263 Neu-Isenburg (DE)
(72) Erfinder: Margraf, Constantin, 36037 Fulda (DE); Begander, Peter, 99867 Gotha (DE)
(74) Vertreter: Ruttensperger Lachnit Trossin Gomoll

(57) **Zusammenfassung**

Ein insbesondere landwirtschaftliches Zugfahrzeug hat einen Anhängebock (12), welcher eine Basisstruktur (18) mit einer Verbindungsformation (20) aufweist, mittels welcher die Basisstruktur (18) starr mit einem zugfahrzeugrahmenfesten Bauteil (14), insbesondere Getriebekasten (14), verbunden ist, wobei der Anhängebock (12) weiter eine Loslagerstruktur (30) mit einer Führungsformation (38) aufweist, welche dazu ausgebildet ist, eine Funktionsanordnung (16) längs einer zur Zugfahrzeug-Rollachse (Ro) parallelen Führungsachse (FA) mit Bewegungsspiel und längs zweier sowohl zueinander als auch zur Führungsachse (FA) orthogonaler Raumachsen lagedefiniert zu lagern, wobei die Loslagerstruktur (30) von der Basisstruktur (18) gesondert ausgebildet ist und eine Festlegeformation (32) zur Festlegung der Loslagerstruktur (30) an der Basisstruktur (18) aufweist, wobei die Loslagerstruktur (30) an der Basisstruktur (18) in zwei unterschiedlichen Betriebsstellungen festlegbar ist, in welchen die Loslagerstruktur (30) um eine zur Führungsachse (FA) orthogonale Stellungsachse (SA) um 180° relativ zueinander verschwenkt ist, wobei die Führungsformation (38) beiderseits einer virtuellen, zur Führungsachse (FA) orthogonalen und wenigstens eine Festlegeformation (32) der Loslagerstruktur (30) an der Basisstruktur (18) durchsetzenden Bezugsebene (BE) unterschiedlich weit vorsteht.

## Beschreibung

Die vorliegende Erfindung betrifft ein Zugfahrzeug mit einem Anhängebock, welcher eine Basisstruktur mit einer Verbindungsformation aufweist, mittels welcher die Basisstruktur starr mit einem zugfahrzeugrahmenfesten Bauteil, insbesondere mit einem Getriebekasten des Zugfahrzeugs, verbunden ist, wobei der Anhängebock weiter eine Loslagerstruktur mit einer Führungsformation aufweist, welche dazu ausgebildet ist, eine Funktionsanordnung längs einer zur Zugfahrzeug-Rollachse parallelen Führungsachse mit Bewegungsspiel und längs zweier sowohl zueinander als auch zur Führungsachse orthogonaler Raumachsen lagedefiniert zu lagern, wobei die Loslagerstruktur von der Basisstruktur gesondert ausgebildet ist und eine Festlegeformation zur Festlegung der Loslagerstruktur an der Basisstruktur aufweist.

Die vorliegende Erfindung betrifft insbesondere ein landwirtschaftliches Zugfahrzeug, wie etwa einen Traktor.

Zur Beschreibung des Zugfahrzeugs und seiner Komponenten verwendet die vorliegende Anmeldung ein in der Fahrzeugtechnik übliches kartesisches Koordinatensystem mit einer in Fahrzeuglängsrichtung verlaufenden Rollachse, einer in Fahrzeugquerrichtung verlaufenden Nickachse und einer in Fahrzeughochrichtung verlaufenden Gierachse.

Es sind vor allem landwirtschaftliche Zugfahrzeuge bekannt, welche eine Kupplungsbaugruppe, umfassend eine Tragplatte und eine von dieser getragene Kupplungsformation als die genannte Funktionsanordnung, an ihrem Anhängebock in zwei unterschiedlichen Anbringungspositionen längs der Rollachse aufnehmen können. Die Kupplungsformation ist zur Ankupplung eines Nachlauffahrzeugs an das Zugfahrzeug ausgebildet, um aus Zugfahrzeug und Nachlauffahrzeug einen Zug zu bilden und diesen flurgebunden zu bewegen (Zugbetrieb). Der Anhängebock ist üblicherweise am Heck des Zugfahrzeugs, dort insbesondere an einem hinteren Ende des Getriebekastens angeordnet.

Das Festlager der Tragplatte bildet dabei in der Regel ein zugfahrzeugrahmenfestes Bauteil, häufig ebenfalls der Getriebekasten des Zugfahrzeugs. Das Loslager der Tragplatte bildet der Anhängebock. Aufgrund der hohen Kräfte und Momente, die im Zugbetrieb bei an die Kupplungsformation angekuppelten Nachlauffahrzeug auf die Kupplungsbaugruppe und insbesondere auf die Tragplatte wirken, muss an dem Loslager der Kupplungsbaugruppe eine gewisse Relativbeweglichkeit längs der Führungsachse gegeben sein, um durch Kräfte und Momente, welche während eines Zugbetriebs auftreten, induzierte Spannungen am Anhängebock zu vermeiden. Längs zweier sowohl zueinander als auch zur Führungsachse orthogonaler Raumachsen ist die Tragplatte insoweit lagedefiniert, dass die Lage der Tragplatte längs dieser Raumachsen eindeutig ist, ohne die Tragplatte zu verklemmen, so dass deren Beweglichkeit längs der Führungsachse gewahrt bleibt. Diese Ausführungen gelten sowohl für den Stand der Technik als auch für die vorliegende Erfindung.

Die unterschiedlichen Anbringungspositionen der Kupplungsbaugruppe und damit der Kupplungsformation bieten dem Zugfahrzeugführer für einen Zugbetrieb mit an das Zugfahrzeug angekuppeltem Nachlauffahrzeug unterschiedliche Vorteile: In einer ersten Anbringungsposition, in welcher sich die Kupplungsformation näher an dem zugfahrzeugrahmenfesten Bauteil befindet, welches ein Festlager der Tragplatte bildet, können an der Kupplungsbaugruppe wegen des kürzeren Lastarms zwischen der Kupplungsformation und dem Anhängebock hohe Stützlasten aufgenommen werden, ohne dass eine vorgegebene maximal zulässige Verformung bzw. Belastung der Kupplungsbaugruppe überschritten wird.

In einer zweiten Anbringungsposition, in welcher sich die Kupplungsformation weiter von dem das Festlager bildenden zugfahrzeugrahmenfesten Bauteil entfernt befindet, kann das angekuppelte Nachlauffahrzeug relativ zum Zugfahrzeug, ausgehend von einer bei Geradeausfahrt auf ebenem horizontalen Untergrund des so gebildeten Zugs erzielten gestreckten, kollinearen Anordnung der Zugfahrzeug und der Nachlauffahrzeug-Rollachse, um eine gierachsenparallele Abwinkelachse stärker abgewinkelt werden als in der oben genannten ersten Anbringungsposition. Dieser verbesserten Rangierbarkeit des Zugs steht wegen des längeren Lastarms zwischen der Kupplungsformation und dem Anhängebock eine reduzierte maximal zulässige Stützlast gegenüber. Denn der längere Lastarm führt, verglichen mit der gleichen Kupplungsbaugruppe angeordnet in der ersten Anbringungsposition und gleicher auf die Kupplungsformation einwirkender Stützlast, zu einem höheren Biegemoment. Somit erreicht die Kupplungsbaugruppe in der zweiten Anbringungsposition ihre maximal zulässige Belastung bzw. ihre maximal zulässige Verformung bei einer geringeren Stützlast als in der ersten Anbringungsposition. Das genannte Biegemoment wirkt bei stillstehendem Zug ausgehend von der auf die Kupplungsformation ausgeübten Stützlast auf den zwischen der Kupplungsformation und dem Anhängebock gelegenen Abschnitt der Kupplungsbaugruppe um eine zur Nickachse des Zugfahrzeugs parallele Biegeachse. Im Fahrbetrieb können aufgrund von an der Kupplungsformation auftretenden dynamischen Kräften weitere Biegemomente um andere Biegeachsen auf die Kupplungsbaugruppe wirken, die bei gleicher dynamischer Kraft aufgrund eines in der zweiten Anbringungsposition höheren Lastarms betragsmäßig größer sind als in der ersten Anbringungsposition.

Der Zugfahrzeugführer kann daher mit den beiden möglichen Anbringungspositionen wählen zwischen der ersten Anbringungsposition mit hoher maximaler Stützlast, aber betragsmäßig eingeschränkter Möglichkeit zur Abwinkelung zwischen Nachlauffahrzeug und Zugfahrzeug um eine gierachsenparallele Abwinkelachse und der zweiten Anbringungsposition mit verbesserter Rangierbarkeit, also verbesserter Möglichkeit zur Abwinkelung zwischen Nachlauffahrzeug und Zugfahrzeug um die gierachsenparallele Abwinkelachse, jedoch mit verringerter maximaler Stützlast.

Es ist daher Aufgabe der vorliegenden Erfindung, das eingangs genannte Zugfahrzeug derart zu verbessern, dass grundsätzlich eine Kupplungsbaugruppe in zwei bezüglich der Rollachse des Zugfahrzeugs unterschiedlichen Positionen an dem Zugfahrzeug festlegbar ist, ohne dass zur Verbesserung der Rangierbarkeit eine allzu große Verringerung der maximalen Stützlast in Kauf genommen werden muss, und umgekehrt.

Diese Aufgabe wird erfindungsgemäß gelöst durch ein wie eingangs beschrieben aufgebautes Zugfahrzeug, bei welchem zusätzlich die Loslagerstruktur an der Basisstruktur in zwei unterschiedlichen Betriebsstellungen festlegbar ist, in welchen die Loslagerstruktur um eine zur Führungsachse orthogonale Stellungsachse um 180° relativ zueinander verschwenkt ist, wobei die Führungsformation beiderseits einer virtuellen, zur Führungsachse orthogonalen und wenigstens eine Festlegeformation der Loslagerstruktur an der Basisstruktur durchsetzenden Bezugsebene unterschiedlich weit vorsteht.

Die Loslagerstruktur weist somit wenigstens eine Festlegeformation auf, mit welcher sie an der Basisstruktur des Anhängebocks festlegbar ist. Die wenigstens eine Festlegeformation der Loslagerstruktur definiert somit eine Lage der Loslagerstruktur relativ zur Basisstruktur. Die Führungsformation, welche dazu ausgebildet ist, eine Kupplungsbaugruppe längs der Führungsachse zu stützen, ist also asymmetrisch relativ zu der wenigstens einen Festlegeformation an der Loslagerstruktur vorgesehen, sodass sie in den beiden genannten um 180° relativ zueinander verschwenkten Betriebsstellungen sich längs der Führungsachse unterschiedlich weit von der Basisstruktur weg erstreckt. Somit kann trotz starrer Anordnung der Basisstruktur an einem zugfahrzeugrahmenfesten Bauteil der von der Führungsformation der Loslagerstruktur bereitgestellte Abstützbereich, längs welchem eine Kupplungsbaugruppe durch die Loslagerstruktur abstützbar ist, abhängig von der gewählten Betriebsstellung der Loslagerstruktur relativ zur Basisstruktur längs der Führungsachse verlagert werden. Folglich kann durch entsprechende Anordnung der Loslagerstruktur an der Basisstruktur ein zwischen einer Kupplungsformation und der Führungsformation wirkender Lastarm einer Kupplungsbaugruppe verändert werden.

So kann grundsätzlich dann, wenn das Zugfahrzeug zusätzlich eine Kupplungsbaugruppe mit einer Tragplatte und einer daran gehalterten Kupplungsformation aufweist, die Loslagerstruktur dann, wenn die Kupplungsbaugruppe in der oben genannten ersten Anordnungsposition größerer Annäherung der Kupplungsformation an die Basisstruktur des Anhängebocks am Zugfahrzeug angeordnet ist, in jener der beiden Betriebsstellungen an der Basisstruktur festgelegt sein, in welcher die Führungsformation weniger stark von der oben genannten Bezugsebene zur Kupplungsformation hin absteht.

Dann jedoch, wenn die Kupplungsformation in ihrer zweiten Anordnungsposition größerer Entfernung der Kupplungsformation von der Basisstruktur des Anhängebocks angeordnet ist, kann die Loslagerstruktur in ihrer jeweils anderen Betriebsstellung an der Basisstruktur festgelegt sein, in welcher die Führungsformation von der oben genannten Bezugsebene stärker zur Kupplungsformation hin als in die entgegengesetzte Richtung absteht. Dadurch kann ein durch die zweite Anordnungsposition der Kupplungsbaugruppe zunächst vergrößerter Lastarm zwischen Kupplungsformation und Basisstruktur bzw. Führungsformation wieder verkürzt werden. In der Folge kann ein Zug, welcher aus dem Zugfahrzeug mit einer Kupplungsbaugruppe in der zweiten Anordnungsposition und einem an die Kupplungsformation der Kupplungsbaugruppe angekuppelten Nachlauffahrzeug gebildet ist, nicht nur aufgrund des größeren Abstandes der Kupplungsformation vom Rahmen des Zugfahrzeugs die oben beschriebene bessere Rangierbarkeit zeigen, sondern die Kupplungsformation kann überdies eine größere Stützlast aufnehmen als im Stand der Technik, wo der Lastarm zwischen Kupplungsformation und Führungsformation unveränderbar ist.

Es sei an dieser Stelle klargestellt, dass das Zugfahrzeug zur Lösung der oben genannten objektiven technischen Aufgabe nur die beschriebene wendbare Loslagerstruktur aufweisen muss. Das Vorhandensein der Funktionsanordnung ist dagegen optional. Die bezüglich der Bezugsebene asymmetrische, wendbare Loslagerstruktur alleine stellt bereits alle technischen Voraussetzungen her, um die vorteilhaften Wirkungen der vorliegenden Erfindung zu nutzen.

Die Loslagerstruktur kann mehr als eine Festlegeformation aufweisen, um sie an der Basisstruktur des Anhängebocks festzulegen. In der Regel wird von mehreren Festlegeformationen der Loslagerstruktur jede ortsunveränderlich an der Loslagerstruktur ausgebildet oder/und vorgesehen sein. Es kommt daher nicht darauf an, welche von mehreren loslagerstrukturfesten Festlegeformation man zur Definition der Bezugsebene auswählt. Es versteht sich von selbst, dass eine einmal zur Definition der Bezugsebene ausgewählte Festlegeformation für die weitere Diskussion derselben Loslagerstruktur beizubehalten ist. Sofern die Führungsformation bezüglich einer Festlegeformation und einer durch sie definierten Bezugsebene die oben beschriebene Asymmetrie aufweist, sind die Wirkungen der Erfindung erzielbar.

Grundsätzlich kann die Stellungsachse in beliebiger Orientierung orthogonal zur Führungsachse verlaufen. Um eine Kupplungsbaugruppe möglichst gleichartig in beide entgegengesetzte Richtungen längs der Nickachse durch die Führungsformation lagedefiniert lagern zu können, ist es jedoch vorteilhaft, wenn die Stellungsachse zu der Zugfahrzeug-Gierachse parallel ist.

Grundsätzlich kann die Loslagerstruktur aus mehreren Teilen gebaut sein, wobei die mehreren Teile lösbar durch Schrauben oder unlösbar durch Schweißen oder Nieten miteinander verbunden sein können. Aus Gründen einer möglichst hohen Festigkeit und Stabilität ist die Loslagerstruktur bevorzugt einstückig ausgebildet. Grundsätzlich kann die Loslagerstruktur als Schmiedeteil oder als Gussteil einstückig ausgebildet sein, wobei die konstruktive Gestalt der Loslagerstruktur die Herstellung durch Schmieden oder die Herstellung ausgehend von einem Gussteil-Rohling bestimmt. Da die an der Loslagerstruktur vorgesehene Führungsformation eine vergleichsweise komplexe Gestalt aufweisen kann, beispielsweise eine oder mehrere Führungsnuten aufweisen kann, ist eine einstückige Ausbildung der Loslagerstruktur ausgehend von einem Gussteil-Rohling bevorzugt.

Zusätzlich oder alternativ kann die Basisstruktur mehrteilig ausgebildet sein. Die Basisstruktur erfüllt häufig mehrere Aufgaben, von welchen die Verbindung mit dem sie haltenden zugfahrzeugrahmenfesten Bauteil und die Aufnahme der Loslagerstruktur nur zwei Aufgaben sind. Aufgrund dieser Aufgabenvielfalt der Basisstruktur ist diese vorzugsweise aus mehreren Bauteilen gebaut.

Zur Erleichterung der Festlegung der Loslagerstruktur an der Basisstruktur in den beiden relativ zueinander um 180° um die Stellungsachse verdrehten Betriebsstellungen ist es vorteilhaft, wenn die Basisstruktur eine Führungsanordnung mit einer zur Führungsachse der Führungsformation orthogonalen Führungsbahn aufweist. Bevorzugt ist die Führungsbahn eine geradlinige Führungsbahn und fällt mit der Stellungsachse der Loslagerstruktur zusammen. Die Loslagerstruktur kann dann eine Gegenführungsanordnung aufweisen, welche in Führungseingriff mit der Führungsanordnung bringbar ist, um die Loslagerstruktur an der Basisstruktur längs der Führungsbahn zu führen. So kann die Loslagerstruktur an der Basisstruktur zunächst längs der Führungsbahn geführt in ihre Festlegeposition verlagert und dort unter Beteiligung der wenigstens einen Festlegeformation der Loslagerstruktur an der Basisstruktur lösbar festgelegt werden. "Lösbar" ist eine Festlegung eines Bauteils an einem anderen im Sinne der vorliegenden Anmeldung dann, wenn die Festlegung ohne Zerstörung von an der Festlegung beteiligten Bauteilen aufgehoben werden kann. Bevorzugt ist die Loslagerstruktur mittels einer Verschraubung, an welcher mehrere Schrauben beteiligt sein können, an der Basisstruktur lösbar festlegbar. Die Loslagerstruktur ist dann, wenn ihre Gegenführungsanordnung in Führungseingriff mit der Führungsanordnung ist, nur längs der Führungsbahn relativ zur Basisstruktur beweglich.

Die Führungsanordnung kann eine oder mehrere Führungsschienen aufweisen. Die Gegenführungsanordnung kann eine - bevorzugt einstückig mit der Loslagerstruktur ausgebildete - Führungseingriffsformation aufweisen, welche mit den Führungsschienen in, vorzugsweise formschlüssigen, Führungseingriff bringbar ist. In einem einfachen, aber sehr effektiven und daher bevorzugten Ausführungsbeispiel umfasst die Führungsanordnung zwei Führungsschienen mit je einer sich längs der Führungsbahn erstreckenden Führungsnut, wobei in jede Führungsnut bei hergestelltem Führungseingriff je einer von zwei entgegengesetzten, bevorzugt jeweils eine Festlegeformation aufweisenden, Randabschnitten der Loslagerstruktur einragt. Besonders bevorzugt ist jeder der Randabschnitte an drei Seiten von der ihm zugeordneten Führungsschiene umgeben. Andere Führungseingriffe zur Führung der Loslagerstruktur längs der Führungsbahn bis zu ihrer Festlegung an der Basisstruktur sind jedoch ebenfalls möglich.

Da die Loslagerstruktur mit ihrer Führungsformation dazu ausgebildet ist, eine Führungsanordnung einer Kupplungsbaugruppe längs zweier zur Zugfahrzeug-Rollachse orthogonaler Raumachsen lagedefiniert zu lagern, bildet die Führungsformation einen Abstützbereich, in welchem die Kupplungsbaugruppe abgestützt ist. Die Führungsformation kann zur vorteilhaften Bereitstellung von relativ zur Basisstruktur möglichst unterschiedlich gelegenen Abstützbereichen in den beiden unterschiedlichen Betriebsstellungen der Loslagerstruktur längs der Führungsachse nur zu einer Seite von der Gegenführungsanordnung weg abstehen. Die Loslagerstruktur kann dann bei Betrachtung orthogonal sowohl zur Führungsachse als auch zur Stellungsachse eine L-förmige Gestalt aufweisen, wobei ein L-Schenkel die Gegenführungsanordnung und der jeweils andere L-Schenkel die Führungsformation repräsentiert. Eine T-förmige Gestalt der Loslagerstruktur ist nach dieser vorteilhaften Weiterbildung der Erfindung dagegen nicht möglich.

Wenngleich ein Zugfahrzeug bereits mit der asymmetrischen wendbaren Loslagerstruktur die eingangs genannte Aufgabe löst und die mit der vorliegenden Erfindung verbundenen Vorteile realisiert, umfasst ein Zugfahrzeug bevorzugt zusätzlich eine zur Ankupplung eines Nachlauffahrzeugs ausgebildete Kupplungsbaugruppe, welche die eingangs genannte Funktionsanordnung bildet.

Zur ordnungsgemäßen betriebsbereiten Anordnung der Kupplungsbaugruppe am Zugfahrzeug weist die Kupplungsbaugruppe eine Festlageranordnung zur Befestigung der Kupplungsbaugruppe an einem zugfahrzeugrahmenfesten Bauteil und eine mit der Führungsformation der Loslageranordnung in Führungseingriff stehende Gegenführungsformation auf. Das zugfahrzeugrahmenfeste Bauteil ist bevorzugt wiederum der Getriebekasten des Zugfahrzeugs, welcher bereits zur Halterung der Basisstruktur des Anhängebocks dient.

Um die Kupplungsbaugruppe, wie eingangs dargelegt, in wenigstens zwei unterschiedlichen Positionen längs der Zugfahrzeug-Rollachse am Zugfahrzeug anzuordnen, ist bevorzugt vorgesehen, dass die Festlageranordnung oder/und eine mit der Festlageranordnung zur Befestigung der Kupplungsbaugruppe am Zugfahrzeug zusammenwirkende zugfahrzeugseitige Gegenfestlageranordnung zur Befestigung der Kupplungsbaugruppe an längs der Zugfahrzeug-Rollachse unterschiedlichen Positionen ausgebildet ist bzw. sind. Bevorzugt ist die Festlageranordnung entsprechend ausgebildet, etwa indem sie zwei gesondert voneinander, im fertig montierten Zustand längs der Zugfahrzeug-Rollachse mit Abstand voneinander ausgebildete Durchgänge für einen Befestigungsbolzen aufweist, der in eine entsprechende Bolzenaufnahme an der Gegenfestlageranordnung einführbar und in dieser befestigbar ist.

Wie ebenfalls bereits weiter oben ausgeführt wurde, kann die Kupplungsbaugruppe eine Tragplatte aufweisen, welche eine Kupplungsformation und die Gegenführungsformation trägt. Aufgrund der bevorzugten landwirtschaftlichen Anwendung der vorliegenden Erfindung ist die Kupplungsformation bevorzugt eine in der Landwirtschaft zur Herstellung von Fahrzeugzügen verwendete Kupplungskugel.

Im Stand der Technik sind Lösungen bekannt, gemäß welchen die Tragplatte einer Kupplungsbaugruppe auf einer die Tragplatte untergreifenden Brücke aufliegt, die in Fahrzeugquerrichtung verläuft und an einem zugfahrzeugrahmenfesten Bauteil festgelegt ist. Nachteilig an dieser Lösung ist, dass die Brücke quer zur Vorwärtsfahrtrichtung des Zugfahrzeugs unter der Tragplatte hindurch verläuft und somit die Bodenfreiheit des Zugfahrzeugs verringert. Gerade im landwirtschaftlichen Betrieb, mit den dafür typischen unebenen, unbefestigten Böden, die vom Zugfahrzeug befahren werden, nimmt mit abnehmender Bodenfreiheit das Risiko eines Festfahrens des Zugfahrzeugs oder einer Beschädigung von Feldfrüchten bei Feldarbeiten des Zugfahrzeugs zu. Außerdem fängt die Brücke Schmutz, wie etwa Schlamm, Erde, Steine und Pflanzenteile, auf, der an der Brücke anbackt und im Volumen mit zunehmender Betriebsdauer anwächst. Daher ist es zur Vermeidung von derartigen Schmutzkonzentrationen an einzelnen Bauteilen des Zugfahrzeugs bevorzugt, wenn unabhängig sowohl von der Befestigungsposition der Kupplungsbaugruppe als auch von der Betriebsstellung der Loslagerstruktur im betriebsbereiten Zustand des Zugfahrzeugs die zu einem Aufstandsuntergrund des Zugfahrzeugs hinweisende Unterseite der Tragplatte den dem Aufstandsuntergrund nächstgelegenen Punkt der zugfahrzeugrahmenfesten Bauteile aufweist. Zumindest reicht die Loslagerstruktur, bevorzugt der gesamte Anhängebock zum Aufstandsuntergrund hin nicht über die Unterseite der Tragplatte hinaus. Die Unterseite der Tragplatte kann bevorzugt glatt ausgebildet sein, sodass sie die Bodenfreiheit der Zugmaschine nicht verändert und insbesondere keine "Kristallisationspunkte" zur Akkumulation von Schmutz bietet. Dies gilt selbst dann, wenn die Tragplatte nicht eben, sondern längs der Zugfahrzeug-Rollachse abgewinkelt oder gekröpft ausgebildet ist.

Dieses Ziel der Unterseite der Tragplatte als tiefster Punkt des Zugfahrzeugs bzw. als seinem Aufstandsuntergrund am stärksten angenäherter Punkt kann konstruktiv dadurch erhalten werden, dass die Gegenführungsformation mit Abstand von der Unterseite der Tragplatte an deren Seitenrand oder/und an deren Oberseite ausgebildet oder/und angeordnet ist. Somit kann die Gegenführungsformation der Tragplatte von der Führungsformation der Loslagerstruktur in Führungseingriff genommen sein, ohne dass die Führungsformation die Unterseite der Tragplatte zum Aufstandsuntergrund hin überragt.

Aus Festigkeitsgründen ist die Gegenführungsformation bevorzugt einstückig mit der Tragplatte ausgebildet. Hierzu kann die Tragplatte mit der Gegenführungsformation wiederum ausgehend von einem Gussteil-Rohling hergestellt sein oder die Tragplatte kann mit daran angeschmiedeter Gegenführungsformation als Schmiedebauteil ausgebildet sein. Die einstückige Ausgestaltung als Schmiedebauteil ist bevorzugt. Dann kann die Gegenführungsformation als wenigstens ein Vorsprung an der Tragplatte ausgebildet sein, welcher in einer entsprechenden Ausnehmung der Führungsformation der Loslagerstruktur längs der Führungsachse beweglich geführt ist.

Die Tragplatte kann überdies einen mit der Kupplungskugel als der Kupplungsformation zusammenwirkenden Niederhalter tragen.

Wie an landwirtschaftlichen Zugfahrzeugen üblich kann auch der Anhängebock des erfindungsgemäßen Zugfahrzeugs über der Loslagerstruktur einen Zapfwellenfreiraum aufweisen. Dabei ist insbesondere an einen Zapfwellenfreiraum nach ISO 500, insbesondere ISO 500-1, gedacht. Durch die oben genannte glatte, ebene oder/und gekröpfte, Ausbildung der Tragplatte kann der verbleibende Raum zwischen dem Zapfwellenfreiraum und dem Bodenfreiraum des Zugfahrzeugs möglichst effizient genutzt werden.

Die eingangs genannte Aufgabe wird auch gelöst durch einen Anhängebock für ein Zugfahrzeug, insbesondere landwirtschaftliches Zugfahrzeug, wie es oben beschrieben und weitergebildet ist, welcher Anhängebock zur Anbringung an ein zugfahrzeugrahmenfestes Bauteil, insbesondere Getriebekasten, ausgebildet ist, wobei der Anhängebock eine zur Anbringung an das zugfahrzeugrahmenfeste Bauteil ausgebildete Basisstruktur und eine Loslagerstruktur mit einer Führungsformation aufweist, welche dazu ausgebildet ist, ein Bauteil, wie etwa eine Kupplungsbaugruppe zur Ankupplung eines Nachlauffahrzeugs, längs einer Führungsachse mit Bewegungsspiel und längs zweier sowohl zueinander als auch zur Führungsachse orthogonaler Raumachsen lagedefiniert zu lagern, wobei die Loslagerstruktur von der Basisstruktur gesondert ausgebildet ist und eine Festlegeformation zur Festlegung der Loslagerstruktur an der Basisstruktur aufweist, wobei die Loslagerstruktur an der Basisstruktur in zwei unterschiedlichen Betriebsstellungen festlegbar ist, in welchen die Loslagerstruktur um eine zur Führungsachse orthogonale Stellungsachse um 180° relativ zueinander verschwenkt ist, wobei die Führungsformation beiderseits einer virtuellen, zur Führungsachse orthogonalen und wenigstens eine Festlegeformation durchsetzenden Bezugsebene unterschiedlich weit vorsteht.

Der Anhängebock kann entsprechend der oben im Zusammenhang mit dem erfindungsgemäßen Zugfahrzeug erläuterten vorteilhaften Weiterbildungen ausgestaltet sein.

Wie oben bereits erläutert, kann die Führungsformation zur Bereitstellung von örtlich möglichst unterschiedlich gelegenen Abstützbereichen in den beiden unterschiedlichen Betriebsstellungen der Loslagerstruktur nur in einer Richtung längs der Führungsachse von einer Festlegeformation, vorzugsweise von der wenigstens einen Festlegeformation, weg abstehen. Die Loslagerstruktur kann dann bei Betrachtung in einer Richtung orthogonal sowohl zur Führungsachse als auch zur Stellungsachse eine L-förmige, aber vorzugsweise keine T-förmige Gestalt aufweisen.

Weiter betrifft die vorliegende Erfindung eine Tragplatte mit einer Kupplungsformation, insbesondere Kupplungskugel, an ihrer Oberseite, mit einer mit Abstand von der Unterseite der Tragplatte an deren Seitenrand oder/und an deren Oberseite ausgebildeten oder/und angeordneten, zur Führung längs einer Gegenführungsachse ausgebildeten Gegenführungsformation und mit einer Festlageranordnung zur Befestigung der Tragplatte an einem zugfahrzeugrahmenfesten Bauteil. Die Tragplatte ist derart zum Zusammenwirken mit dem zuvor genannten Anhängebock oder mit einem Zugfahrzeug mit einem solchen Anhängebock ausgebildet, dass der Anhängebock ein ein Bewegungsspiel längs der Zugfahrzeug-Rollachse einräumendes Loslager bildet und dass ein zugfahrzeugrahmenfestes Bauteil des Zugfahrzeugs ein Festlager der Tragplatte bildet. Die Tragplatte kann entsprechend den obigen Erläuterungen im Zusammenhang mit dem eine Kupplungsbaugruppe aufweisenden Zugfahrzeug weitergebildet sein. Die Unterseite der Tragplatte ist vorzugsweise glatt, also ohne Vorsprünge und Ausnehmungen, mit Ausnahme der oben genannten Festlageranordnung und weiter mit Ausnahme von Anbringungsformationen zur Anbringung der Kupplungsformation oder/und eines Niederhalters oder/und einer weiteren Funktionsbaugruppe an der Tragplatte.

Zur Vermeidung unnötigen Gewichts bei ausreichender Bauteilfestigkeit kann die Tragplatte sich längs der Gegenführungsachse verjüngend ausgebildet sein. Zusätzlich oder alternativ kann ein die Festlageranordnung aufweisender Befestigungsabschnitt der Tragplatte bezüglich eines die Kupplungsformation oder/und die Gegenführungsformation tragenden Abschnitts der Tragplatte von deren Unterseite weg gekröpft sein.

Schließlich betrifft die vorliegende Anmeldung auch einen Bausatz aus einem Anhängebock, wie er oben beschrieben und weitergebildet ist, und aus einer Tragplatte, wie sie oben beschrieben und weitergebildet ist.

Im Zweifel sollen ein Anhängebock oder/und eine Kupplungsbaugruppe bzw. Tragplatte für sich alleine genommen stets in ihrem fertig an ein Zugfahrzeug montierten betriebsbereiten Zustand betrachtet werden. Jeder Fachmann sieht sowohl einem Anhängebock als auch einer Tragplatte sofort und ohne weiteres an, wie diese betriebsbereit an ein Zugfahrzeug anzuordnen sind.

Die vorliegende Erfindung wird nachfolgend anhand der beiliegenden Zeichnungen näher erläutert werden. Es stellt dar:
- Fig. 1: eine grobschematische Seitenansicht eines erfindungsgemäßen Zugfahrzeugs,
- Fig. 2: einen den Anhängebock des Zugfahrzeugs enthaltenden vergrößerten Ausschnitt gemäß Ausschnittsfläche II in Fig.1,
- Fig. 3: den Anhängebock mit Kupplungsbaugruppe von Fig. 1 und 2 in perspektivischer Ansicht von hinten oben,
- Fig. 4: eine grobschematische Längsschnittansicht mit einer zur Nickachse orthogonalen Mittelebene durch den Anhängebock mit Kupplungsbaugruppe der Fig. 1 bis 3 als der Schnittebene, wobei sich die Kupplungsbaugruppe in einer ersten Anbringungsposition mit der Basisstruktur des Anhängebocks stärker angenäherter Kupplungskugel befindet,
- Fig. 5: eine grobschematische Längsschnittansicht durch den Anhängebock mit Kupplungsbaugruppe von Fig. 4, wobei sich die Kupplungsbaugruppe in einer zweiten Anbringungsposition mit von der Basisstruktur des Anhängebocks stärker entfernter Kupplungskugel befindet, und
- Fig. 6: eine grobschematische Längsschnittansicht durch den Anhängebock mit Kupplungsbaugruppe der Fig. 4 und 5, wobei sich die Kupplungsbaugruppe in der zweiten Anbringungsposition mit von der Basisstruktur des Anhängebocks stärker entfernter Kupplungskugel befindet und wobei die Loslagerstruktur des Anhängebocks, verglichen mit ihrer Betriebsstellung in den Fig. 4 und 5, um 180° um eine gierachsenparallele Stellungsachse verdreht ist.

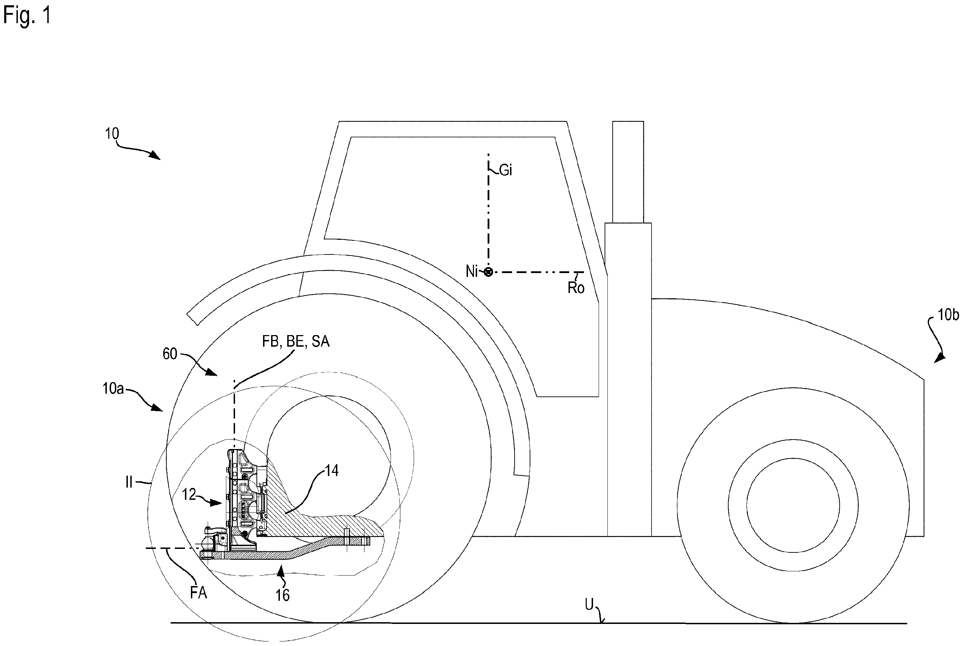

In Figur 1 ist grobschematisch eine erfindungsgemäße Ausführungsform eines Zugfahrzeugs 10 in Gestalt eines Traktors 10, also eines landwirtschaftlichen Zugfahrzeugs 10 gezeigt. Das Zugfahrzeug 10 steht auf einem Untergrund U auf. Zur Beschreibung des Zugfahrzeugs 10 wird ein in der Fahrzeugtechnik übliches kartesisches Koordinatensystem aus zueinander orthogonalen Fahrzeugachsen: Rollachse Ro, Gierachse Gi und Nickachse Ni, verwendet. Die parallel zur Fahrzeuglängsrichtung verlaufende Rollachse Ro und die parallel zur Fahrzeughochrichtung verlaufende Gierachse Gi sind parallel zur Zeichenebene der Figuren 1, 2 und 4 bis 6. Die parallel zur Fahrzeugquerrichtung verlaufende Nickachse Ni ist dementsprechend orthogonal zur Zeichenebene dieser Figuren.

Am Heck 10a des Fahrzeugs 10 ist am unteren Endbereich seines Fahrzeugrahmens ein Anhängebock 12 an einem lediglich grobschematisch angedeuteten Getriebekasten 14 befestigt. Der Getriebekasten 14 ist relativ zum Rahmen des Zugfahrzeugs 10 ortsfest.

Der Anhängebock 12 bildet ein Loslager für eine Kupplungsbaugruppe 16, welche zur Ankopplung eines Nachlauffahrzeugs an das Zugfahrzeug 10 ausgebildet ist.

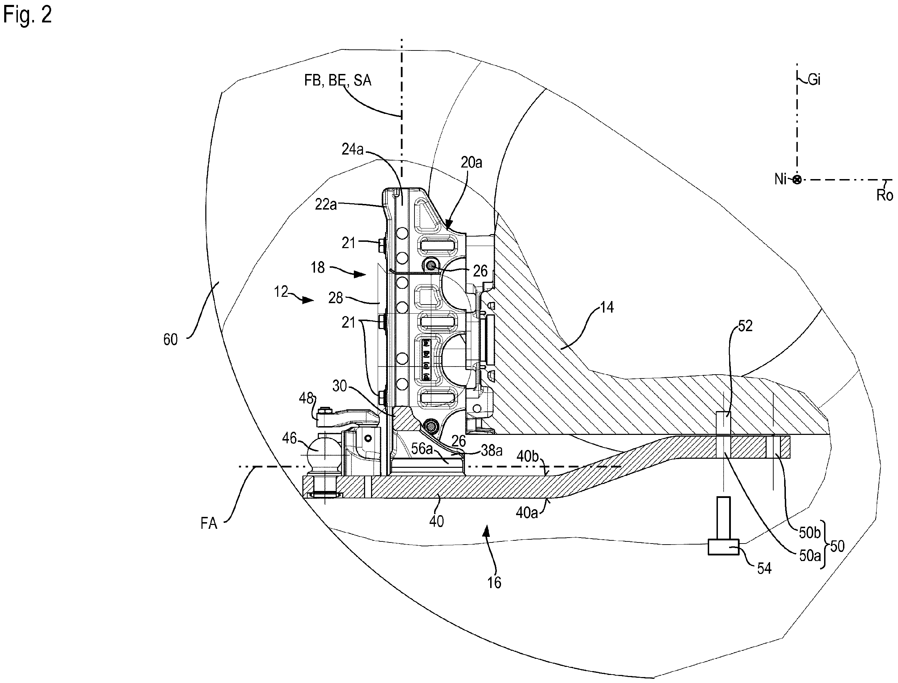

Nachfolgend werden der Anhängebock 12 und die Kupplungsbaugruppe 16, welche eine Funktionsanordnung im Sinne der obigen Beschreibung ist, anhand der Figuren 2 bis 4 erläutert, die den Anhängebock 12 und die Kupplungsbaugruppe 16 größer als die Figur 1 zeigen. Die Figuren 1, 2 und 4 bis 6 zeigen den Anhängebock 12 und die Kupplungsbaugruppe 16 in einer Längsschnittansicht, geschnitten mit einer zur Nickachse Ni orthogonalen Schnittebene, welche den Anhängebock 12 und die Kupplungsbaugruppe 16 längs deren gemeinsamer Quermitte durchsetzt.

Der Anhängebock 12 weist eine Basisstruktur 18 auf, welche einstückig mit einer Verbindungsformation 20 ausgebildet ist, mittels welcher die Basisstruktur 18 mit dem Getriebekasten 14 lösbar verbunden, hier: mittels Schrauben 21 verschraubt, ist. Die Basisstruktur 18 ist aus mehreren Bauteilen gebaut. Sie umfasst im dargestellten Ausführungsbeispiel eine aus zwei gesonderten Teil-Führungsanordnungen 22a und 22b gebildete Führungsanordnung 22. Die Teil-Führungsanordnungen 22a und 22b sind bezüglich einer zur Rollachse Ro und zur Gierachse Gi parallelen, die Basisstruktur 18 in ihrer Quermitte durchsetzenden Symmetrieebene spiegelbildlich ausgebildet. Jede der Teil-Führungsanordnungen 22a und 22b ist einstückig mit je einem Teil 20a bzw. 20b der Verbindungsformation 20 ausgebildet, beispielsweise ausgehend von einem Gussteil-Rohling.

Die Teil-Führungsanordnungen 22a und 22b weisen jeweils parallele Führungsnuten 24a bzw. 24b auf, welche eine im fertig montierten Zustand gierachsenparallele Führungsbahn FB der Basisstruktur 18 definieren. Die Teil-Führungsanordnungen 22a und 22b sind durch Verbindungsstangen 26 miteinander verbunden und zu einer gebauten Basisstruktur 18 vormontiert. An der Basisstruktur 18 ist überdies ein Zapfwellenfreiraum 28 gemäß ISO 500 mit einer Zapfwelle 28a vorgesehen.

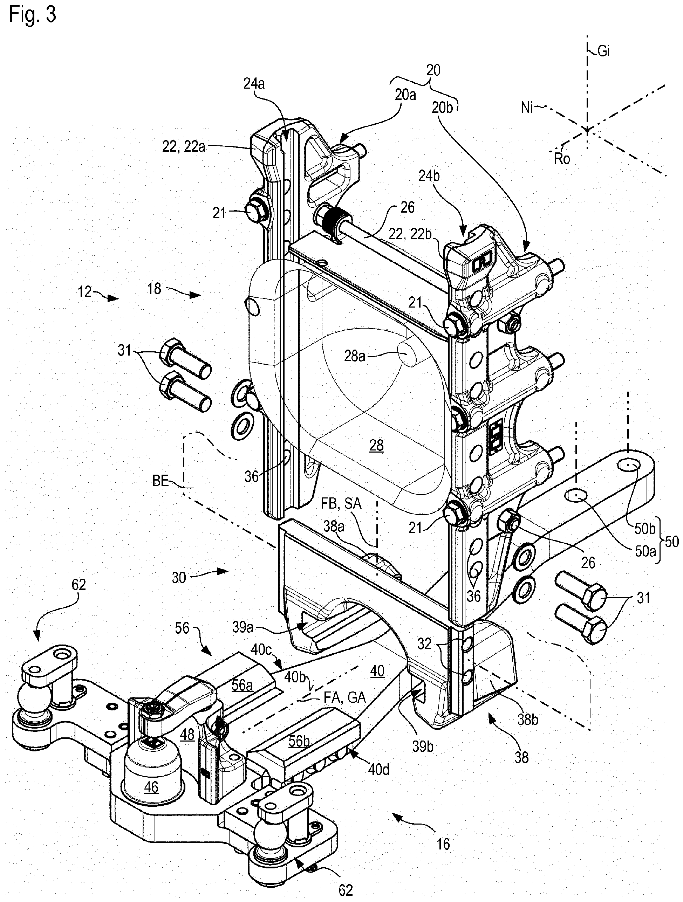

Am unteren Ende der Basisstruktur 18 ist eine Loslagerstruktur 30 mit Schrauben 31 (siehe Figur 3) lösbar an der Basisstruktur 18 festgelegt. Die Loslagerstruktur 30 wird nachfolgend anhand von Figur 3 näher beschrieben werden.

Die bevorzugt ausgehend von einem Gussteil-Rohling einstückig ausgebildete Loslagerstruktur 30 weist zu ihrer Festlegung an der Basisstruktur vier Festlegeformationen 32 in beispielhafter Gestalt von Sacklöchern mit einem Innengewinde zum Eindrehen der Schrauben 31 auf. Die Festlegeformationen 32 liegen in einer gemeinsamen, im fertig montierten Zustand des Anhängebocks 12 zur Rollachse Ro des Zugfahrzeugs 10 orthogonalen Bezugsebene BE. Die Bezugsebene BE ist orthogonal zu den Zeichenebenen der Figuren 2 und 4 bis 6.

Die längs der Nickachse Ni endseitigen Randbereiche der Loslagerstruktur 30 bilden eine Gegenführungsanordnung 34 mit je einer Teil-Gegenführungsanordnung 34a und 34b an jedem Randbereich. Die Teil-Gegenführungsanordnungen 34a und 34b sind längs der Führungsbahn FB in die Führungsnuten 24a bzw. 24b der Führungsanordnung 22 derart einführbar und in Führungseingriff mit dieser bringbar, dass die Gegenführungsanordnung 34, und mit dieser die gesamte Loslagerstruktur 30, nach dem Einführen durch die Führungsanordnung 22 der Basisstruktur 18 nur längs der Führungsbahn FB relativ zur Basisstruktur 18 bewegbar ist. Dies erleichtert die Festlegung der Loslagerstruktur 30 an der Basisstruktur 18 an der durch Durchgangslöcher 36 in der Basisstruktur 18 definierten Festlegeposition.

Die Loslagerstruktur 30 weist außerdem eine Führungsformation 38 auf, welche dazu ausgebildet ist, eine Funktionsanordnung, etwa in Gestalt der Kupplungsbaugruppe 16, längs einer zur Rollachse Ro parallelen Führungsachse FA beweglich zu führen. Die Führungsformation 38 weist zwei Teil-Führungsformationen 38a und 38b auf, welche jeweils eine längs der Führungsachse FA verlaufende Führungsnut 39a und 39b aufweisen. Die Führungsnuten 39a und 39b sind bevorzugt bezüglich der oben bereits genannten zur Nickachse Ni orthogonalen Quermittelebene spiegelsymmetrisch ausgebildet.

Die Loslagerstruktur 30 ist dabei derart ausgestaltet, dass die Führungsformation 38 längs der Führungsachse FA von der zur Führungsachse FA orthogonalen Bezugsebene BE überwiegend in eine Richtung auskragt. Dies ist in der in den Figuren 2 bis 5 gezeigten Betriebsstellung der Loslagerstruktur 30 die zur Vorderseite 10b des Zugfahrzeugs 10 hinweisende Richtung.

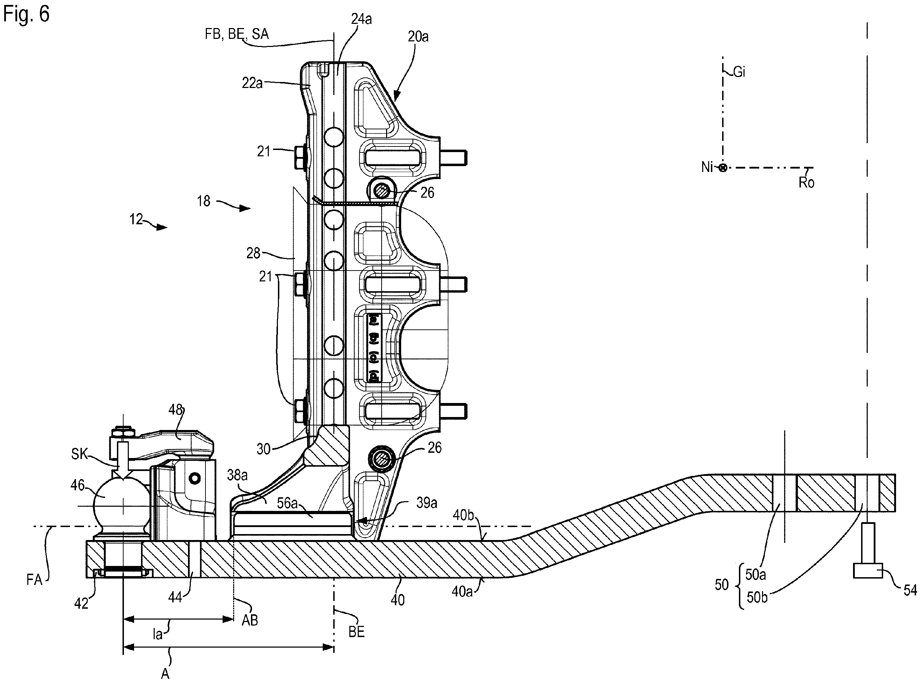

Die Führungsnuten 24a und 24b sind bezüglich der Bezugsebene BE ebenso spiegelsymmetrisch ausgestaltet wie die Gegenführungsanordnung 34 der Loslagerstruktur 30. Daher kann die Loslagerstruktur 30 sowohl in der in den Figuren 2 bis 5 gezeigten Betriebsstellung als auch in der in Figur 6 gezeigten Betriebsstellung an der Basisstruktur 18 festgelegt werden. In der in Figur 6 gezeigten Betriebsstellung ist die Loslagerstruktur 30 bezüglich einer gierachsenparallelen Stellungsachse SA um 180° gegenüber der Betriebsstellung der Figuren 2 bis 5 verdreht. Die Führungsformation 38 kragt daher in der in Figur 6 gezeigten Betriebsstellung überwiegend in Richtung zum Fahrzeugheck 10a hin aus.

Bevor die Vorteile der Wendbarkeit der Loslagerstruktur 30 relativ zu Basisstruktur 18 um die Stellungsachse SA erläutert wird, wird nachfolgend die Kupplungsbaugruppe 16 beschrieben.

Die Kupplungsbaugruppe 16 umfasst eine Tragplatte 40, welche um zwei zueinander und zur Nickachse Ni parallele Biegeachsen gekröpft ausgebildet ist. Die Unterseite 40a der Tragplatte 40 ist mit Ausnahme von etwaigen Anbringungsformationen 42 und 44 zur Halterung einer Kupplungskugel 46 und eines Niederhalters 48 sowie gegebenenfalls einer Vorrichtung 62 zur Zwangslenkung eines Nachlauffahrzeugs auf der Tragplatte 40 und mit Ausnahme einer Festlageranordnung 50 zur ortsfesten Befestigung der Tragplatte 40 glatt und frei von Vorsprüngen. Die Anbringungsformationen 42 und 44 sowie die Festlageranordnung 50 sind im dargestellten Beispiel durch Durchgangsöffnungen gebildet, welche die Tragplatte 40 in Dickenrichtung durchsetzen.

Die Kupplungskugel 46, welche das bevorzugte Ausführungsbeispiel für eine oben genannte Kupplungsformation ist, dient der Ankopplung eines Nachlauffahrzeugs an das Zugfahrzeug 10. Der Niederhalter 48 dient in an sich bekannter Weise der Sicherung einer mit der Kupplungskugel 46 gekoppelten Kupplungspfanne (nicht dargestellt).

Die Festlageranordnung 50 umfasst zwei im Wesentlichen gleichartige, längs der Zugfahrzeug-Rollachse Ro mit Abstand voneinander vorgesehene Durchgangsöffnungen 50a und 50b. Jede der beiden Durchgangsöffnungen 50a oder 50b, aber stets nur eine gleichzeitig, kann mit einer Gegenfestlageranordnung 52, etwa einer Öffnung mit Innengewinde im Getriebekasten 14 (siehe Figur 2), durch einen Befestigungsbolzen 54 am Getriebekasten 14 des Zugfahrzeugs 10 festgelegt werden. Die Festlageranordnung 50 und die Gegenfestlageranordnung 52 bilden ein Festlager der Kupplungsbaugruppe 16 am Zugfahrzeug 10.

An der Oberseite 40b sowie an ihren Seitenrändern 40c und 40d weist die Tragplatte 40 eine zwei Teil-Gegenführungsformationen 56a und 56b aufweisende Gegenführungsformation 56 auf. Jede der Teil-Gegenführungsformationen 56a und 56b ragt sowohl über die Oberseite 40b der Tragplatte 40 als auch seitlich über den ihr zugeordneten nächstgelegenen Seitenrand 40c bzw. 40d der Tragplatte 40 hinaus. Die Teil-Gegenführungsformationen 56a und 56b bilden somit Vorsprünge, welche in den Teil-Führungsformationen 38a bzw. 38b längs der Führungsachse FA beweglich geführt aufgenommen sein können. Dabei sind jeweils Teil-Führungsformationen und Teil-Gegenführungsformationen mit gleichen Kleinbuchstaben einander für einen wechselseitigen Führungseingriff zugeordnet. Die Gegenführungsformation 56 definiert durch ihre Gestalt eine Gegenführungsachse GA. Dann, wenn sich Gegenführungsformation 56 und Führungsformation 38 in Führungseingriff befinden, sind die Führungsachse FA und die Gegenführungsachse GA kollinear.

Die Gegenführungsformation 56 ist aus Gründen einer erhöhten Festigkeit vorzugsweise einstückig mit der Tragplatte 40 ausgebildet, beispielsweise als Schmiedebauteil.

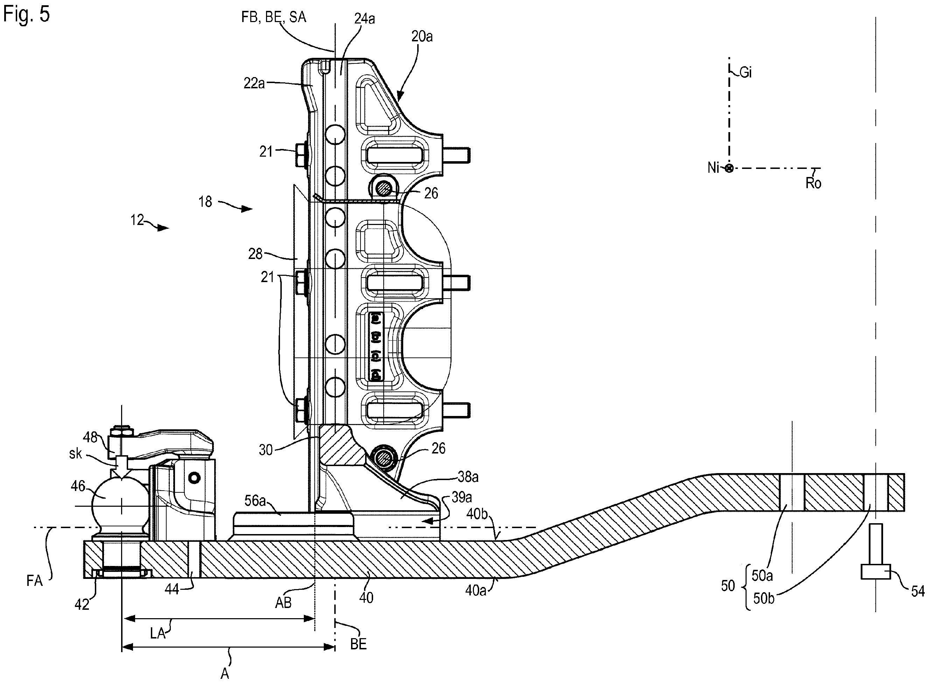

In den Figuren 1, 2 und 4 befindet sich die Kupplungsbaugruppe 16 in einer ersten Anbringungsposition relativ zum Getriebekasten 14 und relativ zur Basisstruktur 18, etwa repräsentiert durch die Bezugsebene BE, in welcher ein Abstand längs der Rollachse Ro zwischen dem Mittelpunkt der Kupplungskugel 46 und der Bezugsebene BE bzw. der Basisstruktur 18 einen kleineren Wert a aufweist als in der in den Figuren 5 und 6 gezeigten zweiten Anbringungsposition der Kupplungsbaugruppe 16. In dieser zweiten Anbringungsposition der Figuren 5 und 6 weist der Abstand des Mittelpunkts der Kupplungskugel 46 zur Bezugsebene BE einen größeren Wert A auf.

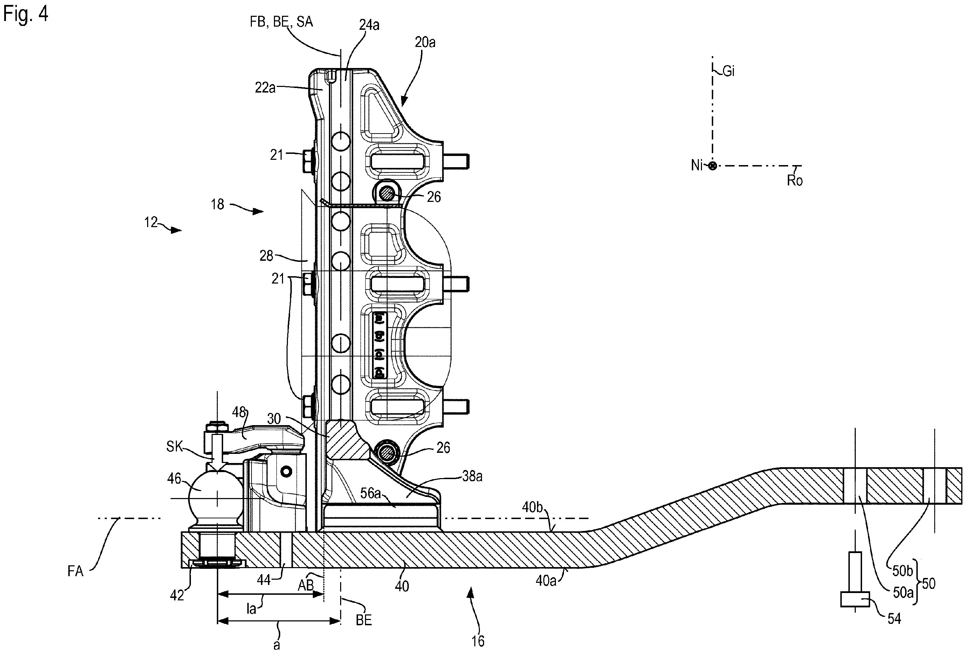

Wirkt auf die Kupplungskugel 46 aufgrund einer Ankupplung eines Nachlauffahrzeugs eine gierachsenparallele Stützkraft SK, so wirkt auf die gesamte Kupplungsbaugruppe 16 ein um eine nickachsenparallele Biegeachse wirkendes Biegemoment, dessen Betrag bestimmt ist durch den Betrag der Stützkraft SK und den Lastarm la, welcher vom Mittelpunkt der Kupplungskugel 46 bis zu einem der Kupplungskugel 46 in Richtung der Rollachse Ro nächstgelegenen Abstützort AB der Tragplatte 40 an der Führungsformation 38 reicht. Da in der ersten Anbringungsposition gemäß Figur 4 der Abstand a zwischen dem Mittelpunkt der Kupplungskugel 46 und der Bezugsebene BE klein ist, ist auch der Betrag des Lastarms la verhältnismäßig klein. Somit kann bei vorgegebener maximal zulässiger Biegebelastung der Kupplungsbaugruppe 16 eine verhältnismäßig hohe Stützkraft SK an der Kupplungskugel 46 abgestützt werden.

Aufgrund der für landwirtschaftliche Zugfahrzeuge 10 üblichen durchmessergroßen Hinterräder 60 wird mit zunehmender Annäherung der Kupplungskugel 46 an die Bezugsebene BE (Basisstruktur 18) der Betrag einer maximal möglichen Abwinkelung zwischen dem Zugfahrzeug 10 und einem an dieses angekuppelten Nachlauffahrzeug kleiner. Die Rangierbarkeit eines so gebildeten Zugs nimmt also mit zunehmender Annäherung der Kupplungskugel 46 an die Bezugsebene BE ab.

In Figur 5 ist die Kupplungsbaugruppe 16 in ihrer zweiten Anbringungsposition gezeigt, in welcher die Tragplatte 40 mit der Durchgangsöffnung 50b der Festlageranordnung 50 am Getriebekasten 14 festgelegt ist. Dementsprechend ist der Abstand A zwischen dem Mittelpunkt der Kupplungskugel 46 und der Bezugsebene BE und somit der Basisstruktur 18 größer als der Abstand a in der ersten Anbringungsposition.

Bei unveränderter Anordnung der Loslagerstruktur 30 an der Basisstruktur 18 nimmt der Lastarm LA zwischen dem Mittelpunkt der Kupplungskugel 46 und dem diesem nächst gelegenen Abstützort AB der Tragplatte 40 an der Führungsformation 38, verglichen mit dem ursprünglich kleineren Lastarm la, beim Übergang der Kupplungsbaugruppe 16 von der ersten Anbringungsposition in die zweite Anbringungsposition in etwa in der gleichen Weise zu wie der oben definierte Abstand A bezüglich des ursprünglich kleineren Abstands a. Da nach wie vor ein und dieselbe Kupplungsbaugruppe 16 verwendet wird, bleibt die gleiche maximal zulässige Biegebelastung der Kupplungsbaugruppe 16 einschlägig. Mit dem Übergang des für die Stützkraft SK relevanten Lastarms von der kürzeren Länge la von Figur 4 auf die größere Länge LA von Figur 5 kann an der Kupplungskugel 46 nur noch eine im Verhältnis der Vergrößerung des Lastarms LA verringerte Stützkraft sk aufgenommen werden, bevor die zulässige maximale Biegebelastung erreicht oder überschritten wird.

Wendet man jedoch mit dem Übergang der Kupplungsbaugruppe 16 von der ersten in die zweite Anbringungsposition die Loslagerstruktur 30 um 180° um ihre Stellungsachse SA, wird dadurch der der Kupplungskugel 46 nächstgelegene Abstützort AB zur Kupplungskugel 46 hin verlagert. Der Abstand A des Mittelpunkts der Kupplungskugel 46 von der Basisstruktur 18, repräsentiert durch die Bezugsebene BE, bleibt vergrößert, verbunden mit einer verbesserten Rangierbarkeit eines mit der Kupplungskugel 46 gebildeten Zugs. Durch das Wenden der Loslagerstruktur 30 und der damit verbundenen Verlagerung des der Kupplungskugel 46 nächstgelegenen Abstützorts AB wird jedoch trotz des großen Abstands A ein verhältnismäßig kleiner wirksamer Lastarm la von dem Mittelpunkt der Kupplungskugel 46 bis zum Abstützort AB erreicht. Somit kann in der Betriebsanordnung der Figur 6 bei gleich guter Rangierbarkeit eines Zugs wie in der Betriebsanordnung von Figur 5 an der Kupplungskugel 46 eine höhere Stützkraft SK abgestützt werden.

Folglich kann ein Maschinenführer entscheiden, ob er das Zugfahrzeug 10 in einer von drei Betriebsanordnungen betreiben will, welche sich durch unterschiedliche Paarungen der Anordnungsposition der Kupplungsbaugruppe 16 einerseits und der Betriebsstellung der Loslagerstruktur 30 andererseits unterscheiden.

In der Betriebsanordnung von Figur 4 kann die Kupplungsbaugruppe 16 eine höhere Stützkraft SK bei verringerter Rangierbarkeit eines Zugs aus Zugfahrzeug 10 und Nachlauffahrzeug aufnehmen. In der Betriebsanordnung von Figur 5 ist dagegen die maximal zulässige Stützkraft bei verbesserter Rangierbarkeit verringert. Der Montageaufwand für einen Übergang der Betriebsanordnung von Figur 4 zu jener der Figur 5 ist jedoch gering. In der Betriebsanordnung von Figur 6 ist die Rangierbarkeit des gebildeten Zugs wie in der Betriebsanordnung von Figur 5 verbessert, jedoch bei gleichzeitig höherer maximal zulässiger Stützkraft. Der Montageaufwand für einen Übergang der Betriebsanordnung von Figur 4 zu jener von Figur 6 ist jedoch wegen des zusätzlichen Wendens der Loslagerstruktur 30 höher als beim Übergang zur Betriebsanordnung der Figur 5.

Lediglich der Vollständigkeit halber sei erwähnt, dass die Tragplatte 40 sich von ihrem die Kupplungskugel 46 tragenden Endbereich zu dem entgegengesetzten, die Festlageranordnung 50 aufweisenden Endbereich verjüngend ausgebildet ist.

Die vorteilhafte Anordnung der Gegenführungsformation 56 an der Oberseite 40b sowie an den Seitenrändern 40c und 40d der Tragplatte 40 kann im fertig montierten Zustand die Unterseite 40a der Tragplatte 40 den tiefsten Punkt des Zugfahrzeugs 10 (mit Ausnahme der Räder) bilden. Die Tragplatte 40 ist somit für die Bodenfreiheit des Zugfahrzeugs 10 über dem Untergrund U, auf dem es aufsteht, bestimmend. Zumindest reicht die Loslagerstruktur 30 wie auch sonst der Anhängebock 12 nicht zum Untergrund U über die Unterseite 40a der Tragplatte 40 hinaus.

## Patentansprüche

1. Zugfahrzeug (10), insbesondere landwirtschaftliches Zugfahrzeug (10), mit einem Anhängebock (12), welcher eine Basisstruktur (18) mit einer Verbindungsformation (20) aufweist, mittels welcher die Basisstruktur (18) starr mit einem zugfahrzeugrahmenfesten Bauteil (14), insbesondere Getriebekasten (14), verbunden ist, wobei der Anhängebock (12) weiter eine Loslagerstruktur (30) mit einer Führungsformation (38) aufweist, welche dazu ausgebildet ist, eine Funktionsanordnung (16) längs einer zur Zugfahrzeug-Rollachse (Ro) parallelen Führungsachse (FA) mit Bewegungsspiel und längs zweier sowohl zueinander als auch zur Führungsachse (FA) orthogonaler Raumachsen lagedefiniert zu lagern, wobei die Loslagerstruktur (30) von der Basisstruktur (18) gesondert ausgebildet ist und eine Festlegeformation (32) zur Festlegung der Loslagerstruktur (30) an der Basisstruktur (18) aufweist, wobei die Loslagerstruktur (30) an der Basisstruktur (18) in zwei unterschiedlichen Betriebsstellungen festlegbar ist, in welchen die Loslagerstruktur (30) um eine zur Führungsachse (FA) orthogonale Stellungsachse (SA) um 180° relativ zueinander verschwenkt ist, wobei die Führungsformation (38) beiderseits einer virtuellen, zur Führungsachse (FA) orthogonalen und wenigstens eine Festlegeformation (32) der Loslagerstruktur (30) an der Basisstruktur (18) durchsetzenden Bezugsebene (BE) unterschiedlich weit vorsteht.

2. Zugfahrzeug (10) nach Anspruch 1,
**dadurch gekennzeichnet, dass** die Stellungsachse (SA) zu einer Zugfahrzeug-Gierachse (Gi) parallel ist.

3. Zugfahrzeug (10) nach Anspruch 1 oder 2,
**dadurch gekennzeichnet, dass** die Loslagerstruktur (30) einstückig ausgebildet ist, vorzugsweise ausgehend von einem Gussteil-Rohling, oder/und dass die Basisstruktur (18) mehrteilig ausgebildet, insbesondere aus mehreren Bauteilen (22a, 22b, 26) gebaut ist.

4. Zugfahrzeug (10) nach Anspruch 3,
**dadurch gekennzeichnet, dass** die Basisstruktur (18) eine Führungsanordnung (22) mit einer zur Führungsachse (FA) der Führungsformation (38) orthogonalen Führungsbahn (FB) aufweist, wobei die Loslagerstruktur (30) eine Gegenführungsanordnung (56) aufweist, welche in Führungseingriff mit der Führungsanordnung (38) bringbar ist, um die Loslagerstruktur (30) an der Basisstruktur (18) längs der Führungsbahn (FA) zu führen.

5. Zugfahrzeug (10) nach Anspruch 4,
**dadurch gekennzeichnet, dass** die Führungsformation (38) längs der Führungsachse (FA) nur zu einer Seite von der Gegenführungsanordnung weg absteht.

6. Zugfahrzeug (10) nach einem der vorhergehenden Ansprüche, mit einer zur Ankupplung eines Nachlauffahrzeugs ausgebildeten Kupplungsbaugruppe (16) als der Funktionsanordnung (16),
**dadurch gekennzeichnet, dass** die Kupplungsbaugruppe (16) eine Festlageranordnung (50) zur Befestigung der Kupplungsbaugruppe (16) an einem zugfahrzeugrahmenfesten Bauteil (14), insbesondere Getriebekasten (14), und eine mit der Führungsformation (38) der Loslageranordnung (30) in Führungseingriff stehende Gegenführungsformation (56) aufweist, wobei die Festlageranordnung (50) oder/und eine mit der Festlageranordnung (50) zur Befestigung der Kupplungsbaugruppe (16) am Zugfahrzeug (10) zusammenwirkenden zugfahrzeugseitige Gegenfestlageranordnung (52) zur Befestigung der Kupplungsbaugruppe (16) an längs der Zugfahrzeug-Rollachse (Ro) unterschiedlichen Positionen ausgebildet ist bzw. sind.

7. Zugfahrzeug (10) nach Anspruch 6,
**dadurch gekennzeichnet, dass** die Kupplungsbaugruppe (16) eine Tragplatte (40) aufweist, welche eine Kupplungsformation (46), insbesondere Kupplungskugel (46), und die Gegenführungsformation (56) trägt, wobei bevorzugt unabhängig sowohl von der Befestigungsposition der Kupplungsbaugruppe (16) als auch von der Betriebsstellung der Loslagerstruktur (30) im betriebsbereiten Zustand des Zugfahrzeugs (10) die zu einem Aufstandsuntergrund (U) des Zugfahrzeugs (10) hinweisende Unterseite (40a) der Tragplatte (40) den dem Aufstandsuntergrund (U) nächstgelegenen Punkt der zugfahrzeugrahmenfesten Bauteile (10) aufweist.

8. Zugfahrzeug (10) nach Anspruch 6 oder 7,
**dadurch gekennzeichnet, dass** Gegenführungsformation (56) mit Abstand von der Unterseite (40a) der Tragplatte (40) an deren Seitenrand (40c, 40d) oder/und an deren Oberseite (40b) ausgebildet oder/und angeordnet ist.

9. Zugfahrzeug (10) nach einem der Ansprüche 6 bis 8,
**dadurch gekennzeichnet, dass** die Gegenführungsformation (56) einstückig mit der Tragplatte (40) ausgebildet ist, etwa als Schmiedebauteil.

10. Zugfahrzeug (10) nach einem der vorhergehenden Ansprüche,
**dadurch gekennzeichnet, dass** der Anhängebock (12) über der Loslagerstruktur (30) einen Zapfwellenfreiraum (28) aufweist.

11. Anhängebock (12) für ein Zugfahrzeug (10), insbesondere landwirtschaftliches Zugfahrzeug (10), nach einem der vorhergehenden Ansprüche, welcher zur Anbringung an ein zugfahrzeugrahmenfestes Bauteil (14), insbesondere Getriebekasten (14), ausgebildet ist, wobei der Anhängebock (12) eine zur Anbringung an das zugfahrzeugrahmenfeste Bauteil (14) ausgebildete Basisstruktur (12) und eine Loslagerstruktur (30) mit einer Führungsformation (38) aufweist, welche dazu ausgebildet ist, ein Bauteil (16), wie etwa eine Kupplungsbaugruppe (16) zur Ankupplung eines Nachlauffahrzeugs, längs einer Führungsachse (FA) mit Bewegungsspiel und längs zweier sowohl zueinander als auch zur Führungsachse (FA) orthogonalen Raumachsen lagedefiniert zu lagern, wobei die Loslagerstruktur (30) von der Basisstruktur (18) gesondert ausgebildet ist und eine Festlegeformation (32) zur Festlegung der Loslagerstruktur (30) an der Basisstruktur (18) aufweist, wobei die Loslagerstruktur (30) an der Basisstruktur (18) in zwei unterschiedlichen Betriebsstellungen festlegbar ist, in welchen die Loslagerstruktur (30) um eine zur Führungsachse (FA) orthogonale Stellungsachse (SA) um 180° relativ zueinander verschwenkt ist, wobei die Führungsformation (38) beiderseits einer virtuellen, zur Führungsachse (FA) orthogonalen und wenigstens eine Festlegeformation (32) durchsetzenden Bezugsebene (BE) unterschiedlich weit vorsteht.

12. Anhängebock (12) nach Anspruch 11,
**dadurch gekennzeichnet, dass** die Führungsformation (38) nur in einer Richtung längs der Führungsachse (FA) von einer Festlegeformation (32), vorzugsweise von der wenigstens einen Festlegeformation (32), weg absteht.

13. Tragplatte (40) mit einer Kupplungsformation (46), insbesondere Kupplungskugel (46), an ihrer Oberseite (40b), mit einer mit Abstand von der Unterseite (40a) der Tragplatte (40) an deren Seitenrand (40c, 40d) oder/und an deren Oberseite (40b) ausgebildeten oder/und angeordneten, zur Führung längs einer Gegenführungsachse (GA) ausgebildeten Gegenführungsformation (56) und mit einer Festlageranordnung (50) zur Befestigung der Tragplatte (40) an einem zugfahrzeugrahmenfesten Bauteil (14).

14. Tragplatte (40) nach Anspruch 13,
**dadurch gekennzeichnet, dass** die Tragplatte (40) sich längs der Gegenführungsachse (GA) verjüngend oder/und dass ein die Festlageranordnung (50) aufweisender Befestigungsabschnitt der Tragplatte (40) bezüglich eines die Kupplungsformation (46) oder/und die Gegenführungsformation (56) tragenden Abschnitts der Tragplatte (40) von deren Unterseite (40a) weg gekröpft ist.

15. Bausatz aus einem Anhängebock (12) nach Anspruch 11 oder 12 und einer Tragplatte (40) nach Anspruch 13 oder 14.
